# EUROPEAN PATENT APPLICATION

(11) **EP 2 996 255 A1**
(43) Date of publication of application: **16.03.2016**
(21) Application number: 14184293.0
(22) Date of filing: 10.09.2014
(51) Int. Cl.: H04B 5/00

(54) **Connector, component and method for capacitive coupling in a communication system and capacitively coupled communication system**

(71) Applicant: ams AG, 8141 Unterpremstätten (AT)
(72) Inventor: Mauro, Afonso Perez, 46021 Valencia (ES); Cavaliere, Francesco, 8010 Graz (AT)
(74) Representative: Epping - Hermann - Fischer

(57) **Abstract**

A connector for capacitive coupling of a first communicator (RX, TX) and a second communicator (RX, TX) of a communication system comprises a first, a second, a third and a fourth electrode (E1, E2, E3, E4), all of which are electrically conductive. The first and third electrodes (E1, E3) are designed to be coupled to the first communicator (RX, TX). The second and fourth electrodes (E2, E4) are designed to be coupled to the second communicator (RX, TX). The electrodes (E1, E2, E3, E4) are designed to constitute capacitive couplings. Additionally, the first and the second electrode (E1, E2) are designed to induce an attractive force between themselves by means of a magnetic interaction. Analogously, the third and the fourth electrode (E3, E4) are designed to induce an attractive force between themselves by means of a magnetic interaction.

## Description

The present invention relates to a connector for capacitive coupling in a communication system, to a component of such communication system, to a capacitively coupled communication system and to a method for capacitive coupling in a communication system.

In modern communication systems, communication channels between a transmitter sending data and a receiver receiving the data are often implemented by means of capacitive coupling, also known as AC coupling. In particular, in systems where the receiver and/or the transmitter are attached to mobile devices and therefore the coupling is necessarily detachable, capacitive coupling may be more suitable than for example an ohmic coupling. Also in systems wherein the receiver and the transmitter do not share a common ground potential, capacitive coupling may provide benefits.

In a detachable capacitively coupled communication system, it may be of significant importance to maintain a constant capacitance value between transmitter and receiver. A limitation of external capacitor plates may for example be variations of a coupling capacitance due to a misalignment and/or a distance variation between the capacitor plates. Such a misalignment may generate deviations in the capacitance value.

In existing connectors for capacitive coupling, for example mechanical molding parts around the electrical connector, like the capacitor plates, are used to keep the two sides aligned and in contact. Such solutions commonly may be limited in speed of establishing a communication channel, reliability and/or life time.

It is therefore desirable to provide an improved concept for a connector for a detachable capacitive coupling in a communication system achieving a consistent coupling capacitance.

This objective is achieved by the subject-matter of the independent claims. Developments, embodiments and implementations are subject-matter of the dependent claims.

A connector according to the improved concept keeps coupling capacitances to fixed values by using magnetic attractions between two pairs of electrodes. To this end, electrodes are utilized that are both magnetic and electrically conductive.

According to the improved concept, a connector for capacitive coupling of a first communicator and a second communicator of a communication system comprises a first electrode, a second electrode, a third electrode and a fourth electrode, all of which are electrically conductive. The first and the third electrode are designed to be coupled to the first communicator while the second and the fourth electrode are designed to be coupled to the second communicator. Furthermore, the first and the second electrode are designed to constitute a capacitive coupling while the third and the fourth electrode are designed to constitute an additional capacitive coupling. Additionally, the first and the second electrode are designed to induce an attractive force between the first and the second electrode by means of a magnetic interaction. Analogously, the third and the fourth electrode are designed to induce an attractive force between the third and the fourth electrode by means of a magnetic interaction.

By means of a connector according to the improved concept, to be used in particular in differential communication systems, information may be transported from the transmitter to the receiver via two pairs of electrodes, namely the first and the second electrode on one hand and the third and the fourth electrode on the other hand. The information may for example be encoded in a signal difference between a signal transported via the first and second electrodes and a signal transported via the third and fourth electrodes. Alternatively or in addition, information may also be transported in a parallel fashion via the first and second electrodes on one hand and via the third and fourth electrodes on the other hand.

This concept is of course not limited to two pairs of capacitively coupled electrodes, but can be extended analogously to three, four or more pairs of electrodes. Even pairs of capacitively coupled electrodes, for example according to the improved concept, may be combined with otherwise coupled pairs of electrodes, for example ohmic coupled pairs of electrodes or conventional capacitively coupled pairs of electrodes.

For inducing the attractive magnetic forces, the first, the second, the third and the fourth electrode may for example feature a first, a second, a third and a fourth magnetization, respectively. In particular, opposite magnetic poles of the first and the second electrode, respectively, and of the third and the fourth electrode, respectively, may induce the attractive forces.

In the communication system, the first communicator is a transmitter or a receiver or both, that is a transceiver. Also the second communicator is a transmitter or a receiver or a transceiver. If the first communicator is a transmitter, the second communicator is for example a receiver or a transceiver. If the first communicator is a receiver, the second communicator is for example a transmitter or a transceiver. If the first communicator is a transceiver, the second communicator preferably is also a transceiver.

The first and second communicators may for example be implemented in electronic devices. For example, one or both of them may be implemented in mobile electronic devices, for example in a mobile or cordless telephone, a tablet or laptop computer or another mobile device. For example, one or both of the first and second communicators may also be implemented in a stationary electronic device, for example a docking station, a personal computer or an interface device. Other examples of applications comprise industrial connectors or connectors in robotics, automotive or aerospace industry for example.

Depending for example on geometrical, structural and/or material properties of the first, the second, the third and/or the fourth electrode, the first, the second, the third and the fourth magnetization may cause magnetic fields having various characteristics such as for example strengths, homogeneities and directions.

The capacitive coupling via the connector may for example be detachable in the sense that the coupled electrodes are not permanently fixed to each other. In such implementations, the coupling is constituted and the attractive force is induced when the respective electrodes are attached to each other, that is when they are for example in close proximity to each other. In case the respective electrodes are detached, the couplings and the attractive forces may not be present or may be reduced. For detaching, the attractive forces may for example be overcome by applying an external mechanical force to one or more of the first, the second, the third and the fourth electrode, the first communicator and the second communicator.

When the respective electrodes are attached to each other, information may be exchanged between the first and the second communicator. Depending on the implementation, the first, the second, the third and/or the fourth electrode may comprise electrically isolating components, for example electrically isolating layers, coatings, covers or the like. In this way a direct, a non-capacitive and/or an ohmic coupling between the first and the second electrode and between the third and the fourth electrode may for example be avoided. Consequently, a sensitivity of the exchange of information on common-mode errors may for example be avoided. Additionally, the first and the second communicator may or may not share a common ground potential or reference potential.

In various implementations of the connector, the attractive force between the first electrode and the second electrode aligns the first electrode and the second electrode with respect to each other. Analogously, the attractive force between the third electrode and the fourth electrode aligns the third electrode and the fourth electrode with respect to each other. In this way, optimized, maximized, consistent and/or constant capacitances as well as stable physical connections between the first and the second electrode and between the third and the fourth electrode may be achieved.

For example, in an implementation wherein the first and the second electrode are implemented as parallel plates facing each other and featuring common normals, the alignment may be such that a center of the first electrode and a center of the second electrode both lie on one of the common normals. Furthermore, also a relative rotation angle of the first and the second electrode may be adjusted in this way. The analog holds for the third and the fourth electrode.

In another implementation, wherein the first and the second electrode are implemented as a cylinder and a hollow cylinder, respectively, the alignment may for example result in a centering of the cylinder within the hollow cylinder. The analog holds for the third and the fourth electrode.

In some implementations of the connector, the first electrode features a first magnetization, the second electrode features a second magnetization, the third electrode features a third magnetization and the fourth electrode features a fourth magnetization. At least one of the first, the second, the third and the fourth magnetization is inherent to the respective of the electrodes, for example being permanent magnetizations. Alternatively, said magnetization is electromagnetically induced. Said magnetizations may also be an arbitrary combination of magnetizations being inherent to the respective electrode and being electromagnetically induced.

In particular, in such implementations, for example the first electrode may be attached to or may comprise a permanent magnet or an electromagnet. In case of an electromagnet, the first magnetization may for example be generated by an inductor and/or a solenoid. Such inductor and/or solenoid may for example be comprised by or attached to the first communicator, the first electrode and or an electronic device associated with the first communicator. Analogously, the second electrode may be attached to or may comprise a permanent magnet or an electromagnet. The said holds analogously for the third and the fourth electrode and the respective magnetizations, as the skilled reader will readily deduce.

In other implementations, for example the first magnetization may be inherent to the first electrode or electromagnetically induced while for example the second magnetization is induced by the first magnetization. In such implementations, the second electrode may for example comprise a ferromagnetic, a ferrimagnetic and/or a paramagnetic material. Alternatively, the second electrode may for example be attached or connected to a ferromagnetic, a ferrimagnetic and/or a paramagnetic material. In such implementations, the attractive force between the first electrode and the second electrode may be induced without the second magnetization being a permanent magnetization or an electromagnetically induced magnetization. Obviously, the above said holds mutatis mutandis for implementations where the first magnetization is induced by the second magnetization.

In similar implementations, for example the third magnetization may be inherent to the third electrode or electromagnetically induced while for example the fourth magnetization is induced by the third magnetization or vice versa. In such implementations, the fourth electrode may for example comprise a ferromagnetic, a ferrimagnetic and/or a paramagnetic material. Alternatively, the fourth electrode may for example be attached or connected to a ferromagnetic, a ferrimagnetic and/or a paramagnetic material.

In several implementations of the connector, the first electrode comprises a first body, the second electrode comprises a second body, the third electrode comprises a third body and the fourth electrode comprises a fourth body. Therein the first, the second, the third and/or the fourth body are made of a magnetic or a magnetizable material. In such implementations, the first, the second, the third and/or the fourth body comprise the first, the second, the third and the fourth magnetization, respectively. Furthermore, the first, the second, the third and/or the fourth body may for example be made of an electrically conductive material.

Alternatively or in addition, said electrodes may comprise conductive coatings made of an electrically conductive material. In the latter implementations, the conductive coating of one of the electrodes may cover the respective body at least partly. Such implementations may for example be particularly suitable, if the electrical conductivity of the magnetic or magnetizable material the bodies are made of is zero or low or too low for a desired application.

In other implementations, the first electrode comprises a first body, the second electrode comprises a second body, the third electrode comprises a third body and the fourth electrode comprises a fourth body. Therein the first, the second, the third and/or the fourth body are made an electrically conductive material and the first, the second, the third and/or the fourth electrode comprise magnetic coatings made of a magnetic or a magnetizable material. In such implementations, the magnetic coatings comprise the magnetizations or parts of the magnetizations, respectively. In such implementations, the magnetic coatings may cover the respective bodies at least partly.

In some implementations, the connector further comprises additional alignment means designed to align and/or fix the first and the second electrode with respect to each other and/or to align and/or fix the third and the fourth electrode with respect to each other.

As explained earlier, the first and the second magnetization may lead to a physical alignment of the first and the second electrode with respect to each other and the third and the fourth magnetization may lead to a physical alignment of the third and the fourth electrode with respect to each other These alignments may be sufficient for several applications. In specific applications, it may be beneficial to incorporate additional alignment means to achieve for example a further improved fixing. The additional alignment means may for example include mechanical means such as mechanical molding parts around the connector and/or for example the electrodes. The additional alignment means may for example also include an extra magnet arrangement apart from the magnetic electrodes. The additional alignment means may for example also include specific geometric features of the electrodes, for example adjusted curvatures or cavity/bulge pairs.

In several implementations, the first, the second, the third and the fourth electrode are designed to induce a repulsive force between the first and the fourth electrode and a repulsive force between the second and the fourth electrode by means of magnetic interactions.

In such implementations, an automatic connection between the corresponding electrodes may be achieved by a respective choice of the electrodes' magnetic polarities. For example, the first electrode connected to the first communicator may have a magnetic north pole facing a magnetic south pole of the second electrode connected to the second communicator. Then, the third electrode connected to the first communicator may have a magnetic south pole facing a magnetic north pole of the fourth electrode connected to the second communicator. In this way, an attractive force is created between the first electrode and the second electrode, but a repulsive force is induced between the first electrode and the fourth electrode, thus preventing from false connections. Analogously, an attractive force is induced between the third electrode and the fourth electrode, but a repulsive force is induced between the third electrode and the second electrode.

According to the improved concept, also a communication system is provided. Such a communication system comprises a connector according to the improved concept for example according to an implementation described herein. The communication system further comprises at least the first communicator and the second communicator. Therein, the first and the second communicator are a transmitter, a receiver or a transceiver, respectively. The first and the third electrode are coupled to the first communicator and the third and the fourth electrode are coupled to the second communicator.

In some implementations of the communication system, the first communicator is comprised by a first mobile electronic device. The second communicator is comprised by a second mobile electronic device being independent from the first electronic device or by a stationary electronic device. Being independent means here that the first and the second device may be used without each other. However, the first and the second device may transfer information utilizing the connector according to the improved concept for example when attached other or brought close to each other.

Some implementations of the communication system are designed for being used in an industrial connector arrangement and/or in a robotics system.

According to the improved concept, also a component of a communication system for capacitive coupling of a first communicator to a second communicator is provided. The first communicator is coupled to a first electrode and to a third electrode. The first and the second communicator each are a transmitter, a receiver or both, that is a transceiver, respectively. The component comprises a second electrode and a fourth electrode designed to be coupled to the second communicator. The second and the fourth electrode are further designed to constitute the capacitive coupling together with the first and the third electrode, respectively. Together with the first and the third electrode, respectively, the second and the fourth electrode are designed to induce an attractive force between the first and the second electrode and between the third and the fourth electrode, respectively, by means of magnetic interactions.

A component according to the improved concept is, in a sense, "one half of a connector" according to the improved concept. Consequently, the various implementations described with respect to the connector may be adapted to achieve respective implementations of the component as well.

According to the improved concept, also a method for capacitive coupling of a first communicator and a second communicator of a communication system is provided. Therein, the first and the second communicator each are a transmitter, a receiver or a transceiver.

The method comprises a step of approaching the first communicator to the second communicator and/or vice versa. Then, a capacitive coupling between a first electrode coupled to the first communicator and a second electrode coupled to the second communicator is established. An additional capacitive coupling between a third electrode coupled to the first communicator and a fourth electrode coupled to the second communicator is established. Furthermore, the method comprises aligning the first electrode and the second electrode with respect to each other by means of a magnetic interaction between the first electrode and the second electrode. The method also comprises aligning the third electrode and the fourth electrode with respect to each other by means of a magnetic interaction between the third electrode and the fourth electrode.

In some implementations of the method, the magnetic interactions originate from a first magnetization of the first electrode, a second magnetization of the second electrode, a third magnetization of the third electrode and a fourth magnetization of the fourth electrode. At least one of the first, the second, the third and the fourth magnetization is for example inherent to the respective of the electrodes or is electromagnetically induced. Alternatively, one or more of the magnetizations may be induced by a respective one of the magnetizations.

Further implementations of the method and the component are readily derived from the various implementations of the connector.

The described implementations and embodiments of the connector, the component and the method may for example be split and/or combined to achieve further implementations and embodiments that may be suitable or particularly suitable for specific applications. In particular, one of the electrodes may be implemented according to one of the described implementations of the connector, while for example another one of the electrodes may be implemented according to another one of the described implementations.

In the following the invention is explained in detail with the aid of exemplary implementations by reference to the drawings. Components that are functionally identical or have an identical effect may be denoted by identical references. Identical or effectively identical components may be described only with respect to the Figure where they occur first, their description is not necessarily repeated in successive Figures.
- Figure 1: shows a connector of a communication system;
- Figure 2: shows an exemplary implementation of a connector according to the improved concept;
- Figure 3: shows schematic equivalent circuits of a communication system according to the improved concept;
- Figure 4A: shows a schematic illustration of electrodes of an exemplary implementation of a connector according to the improved concept;
- Figure 4B: shows a schematic illustration of electrodes of a further exemplary implementation of a connector according to the improved concept;
- Figure 5A: shows a further exemplary implementation of a connector according to the improved concept;
- Figure 5B: shows a further exemplary implementation of a connector according to the improved concept;
- Figure 5C: shows a further exemplary implementation of a connector according to the improved concept;
- Figure 5D: shows a further exemplary implementation of a connector according to the improved concept; and
- Figure 5E: shows a further exemplary implementation of a connector according to the improved concept.

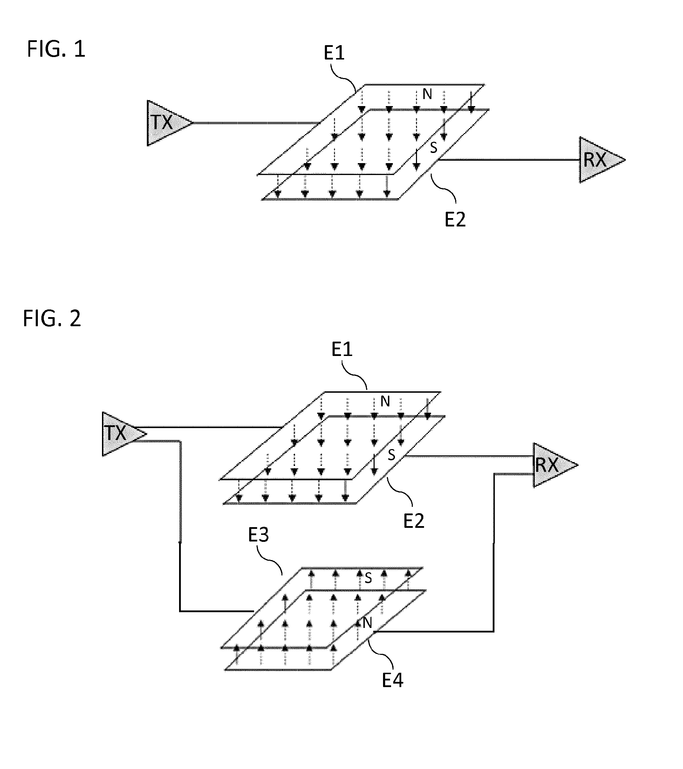

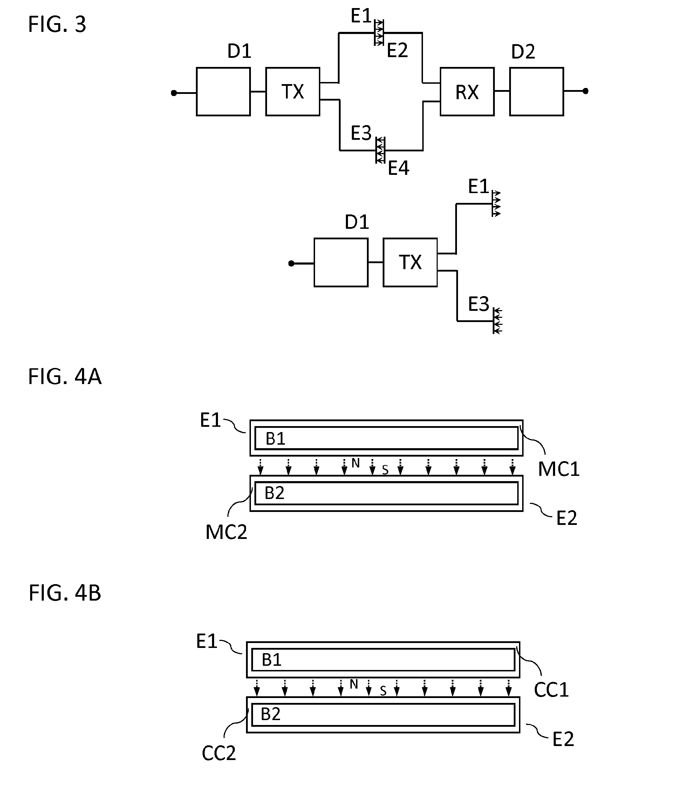

In Figure 1, a connector of a communication system is shown. The connector comprises a first electrode E1 coupled to a first communicator TX and a second electrode E2 coupled to a second communicator RX. The first and the second communicator TX, RX may for example be coupled to or comprised by electronic devices (not shown in Figure 1, see Figure 3).

In the shown example, the first and second electrodes E1, E2 have shapes of congruent or approximately congruent rectangular plates arranged on top of each other and facing each other. The first and the second electrode E1, E2 feature a first and a second magnetization, respectively. A resulting magnetic field is indicated by the arrows pointing from a lower side of the first electrode E1, representing a magnetic north pole N, to an upper side of the second electrode E2, representing a magnetic south pole S. This arrangement causes an attractive force acting between the first and second electrodes E1, E2, in particular aligning the first and second electrodes E1, E2 in a desired geometry, in a certain sense leading to a self-alignment of the first and second electrodes E1, E2. Naturally, in equivalent implementations, for example featuring opposite magnetizations, the lower side of the first electrode E1 may represent a magnetic south pole and the upper side of the second electrode E2 may represent a magnetic north pole.

Figure 2 shows an exemplary implementation of a connector in a communication system, in particular of a differential communication system, according to the improved concept. The connector is based on the one shown in Figure 1. Additionally it comprises a third electrode E3 coupled to the first communicator TX and a fourth electrode E4 coupled to the second communicator RX.

In the present example, the first communicator TX is implemented as a transmitter TX and the second communicator RX is implemented as a receiver RX. Therein, the transmitter TX and the receiver RX may or may not share the same ground potential. In alternative embodiments, the first communicator may for example be implemented as a receiver and the second communicator as a transmitter. In further embodiments, the first and/or the second communicator may be implemented as a transceiver.

In the shown example, the first and second electrodes E1, E2 have shapes of congruent or approximately congruent rectangular plates arranged on top of each other and facing each other. The third and fourth electrodes E3, E4 also have shapes of congruent or approximately congruent rectangular plates arranged on top of each other and facing each other. The first and the second electrode E1, E2 feature a first and a second magnetization, respectively. The third and the fourth electrode E3, E4 feature a third and a fourth magnetization, respectively. Resulting magnetic fields are indicated by arrows pointing from a lower side of the first electrode E1, representing a magnetic north pole N, to an upper side of the second electrode E2, representing a magnetic south pole S and from an upper side of the fourth electrode E4, representing a magnetic north pole N, to a lower side of the third electrode E3, representing a magnetic south pole S.

This arrangement causes attractive forces acting between the first and second electrodes E1, E2 and between the third and the fourth electrodes E3, E4, respectively. In particular, the attractive forces align the first and second electrodes E1, E2 as well as the third and the fourth electrode E3, E4 in desired geometries. In a certain sense, this leads to a self-alignment of the first and second electrodes E1, E2 and of the third and fourth electrodes E3, E4. Naturally, in equivalent implementations, for example featuring opposite magnetizations, the lower side of the first electrode E1 and the upper side of the fourth electrode E4 may represent magnetic south poles S. Then, for example the upper side of the second electrode E2 and the lower side of the third electrode E3 may represent magnetic north poles N. Also other combinations of poles may be suitable.

The third and the fourth electrode E3, E4 constitute a second communication path in parallel to a first communication path constituted by the first and the second electrode E1, E2. In the arrangement of Figure 2, the lower side of the first electrode E1 and the upper side of the fourth electrode E4 feature the same magnetic north polarity N. Analogously, the upper side of the second electrode E2 and the lower side of the third electrode E3 feature the same magnetic south polarity S. Therefore, repulsive magnetic forces are induced between the first electrode E1 and the fourth electrode E4 as well as between the second electrode E2 and the third electrode E3. In this way, in a sense an automatic connection of the first electrode E1 to the second electrode E2 may be achieved, while an accidental or wrong connection of the first electrode E1 to the fourth electrode E4 may be avoided. Analogously, an automatic connection of the third electrode E3 to the fourth electrode E4 may be achieved, while an accidental or wrong connection of the third electrode E3 to the second electrode E2 may be avoided.

As for the first and second electrodes E1, E2, also the third and fourth electrodes E3, E4 are both electrically conductive and magnetic. Thus, the first and the second electrode E1, E2 as well as the third and the fourth electrode E3, E4 capacitively couple the transmitter TX to the receiver RX.

The third and the fourth electrode E3, E4 are implemented in analogy to the first and second electrode E1, E2 according to one of the implementations of the connector described below or earlier. It is highlighted, however, that in the connector of Figure 2, the structural implementations of the third and fourth electrodes E3, E4 do not necessarily have to be identical to the structural implementations of the first and second electrodes E1, E2. Any combination of the described implementations may be suitable for specific applications or purposes.

Due to the improved alignment of the first and second electrodes E1, E2 and the third and fourth electrodes E3, E4, an undesired cross coupling may for example be reduced or avoided in a differential communication system with a connector as in Figure 2. The cross-coupling may for example correspond to a undesired capacitive coupling between the first electrode E1 and the fourth electrode E4 and/or between the third electrode E3 and the second electrode E2.

In an application, the electronic devices comprising the transmitter TX and the receiver RX, respectively, may for example be in direct physical contact while the capacitive coupling is active. However, it is obviously preferable that the first and second electrodes E1, E2 are not electrically connected. In respective implementations of the connector, the first and second electrodes E1, E2 may for example be electrically isolated from each other, for example by means of an isolating coating and/or a housing. The analog holds for the third and the fourth electrode E3, E4. Alternatively, there may be a distance between the first and second electrodes E1, E2 and/or between the third and the fourth electrode E3, E4.

The first and the third electrode E1, E3 may for example be detachable from the second and the fourth electrode E2, E4, respectively. In this way the capacitive coupling between the transmitter TX and the receiver RX may be lifted, for example if it is not necessary or not desired in the application.

In the shown example, the first, the second, the third and the fourth magnetization may for example be caused by permanent magnetic materials comprised by the electrodes E1, E2, E3, E4. Alternatively, the electrodes E1, E2, E3, E4 may be implemented for example as electromagnets. In further alternative implementations, at least one of the electrodes E1, E2, E3, E4 is for example implemented as a permanent magnet or an electromagnet, while at least another one of the electrodes E1, E2, E3, E4 is implemented as a paramagnet or ferromagnet. In such an implementation, the permanent magnets or electromagnets may for example induce respective magnetizations in the paramagnets or ferromagnets. Then, the magnetizations result in the attractive force between the first and second electrode E1, E2 and between the third and the fourth electrode E3, E4.

The magnetizations cause magnetic fields and consequently attractive forces between the first and the second electrode E1, E2 and between the third and the fourth electrode E3, E4 are induced, aligning said electrodes with respect to each other. In particular, defined distances as well as desired orientations and/or congruencies between the first and the second electrode E1, E2 and between the third and the fourth electrode E3, E4 may be achieved in this way. Also, an undesired tilt of the electrodes E1, E2, E3, E4 with respect to each other may be avoided.

In other implementations, the electrodes E1, E2, E3, E4 may for example comprise electrically conductive bodies and magnetic coatings as described below with respect to Figure 4A.

Alternatively, the electrodes E1, E2, E3, E4 may for example comprise magnetic bodies and electrically conductive coatings as described below with respect to Figure 4B.

The upper part of Figure 3 shows schematically a block diagram of an equivalent circuit of a communication system according to the improved concept. A first device D1 is coupled to, in particular comprises, a first communicator TX implemented as a transmitter TX and a second device D2 is coupled to, in particular comprises, a second communicator RX implemented as a receiver RX. The transmitter TX is coupled to, and for example comprises, a first electrode E1 and a third electrode E3, while the receiver RX is coupled to, and for example comprises, a second electrode E2 and a fourth electrode E4.

The first electrode E1 and the second electrode E2 are in close proximity in the upper part of the Figure which results in a capacitive coupling. The analog holds for the third and the fourth electrode E3, E4. The electrode E1, E2, E3, E4 feature a first, a second, a third and a fourth magnetization, respectively. In the present example, this is indicated by arrows pointing from the magnetic north poles (not shown) at the first and the fourth electrodes E1, E4 to the magnetic south poles (not shown) at the second and the third electrodes E2, E3. This leads to attractive forces between the first and the second electrode E1, E2 and between the third and the fourth electrodes E3, E4, yielding an alignment of said electrodes with respect to each other.

The upper part of Figure 3 may for example represent a situation where the first device D1, for example an electronic device, for example a mobile electronic device, is in close proximity to the second device D2, for example an electronic device, for example a stationary electronic device.

In the lower part of Figure 3, a schematic equivalent circuit is shown for a situation where the communication system is detached. Only a part of the communication system is shown, including the first device D1, the transmitter TX and the first and third electrodes E1, E3.

Figures 4A to 5E show illustrations of the first and the second electrode E1, E2 of the connector according to the improved concept. For the sake of clarity, the third and fourth electrodes E3, E4 are not shown, but they may be implemented in the same way or according to another implementation, in particular another implementation according to the improved concept.

Figure 4A shows schematically a cross section through the first and the second electrode E1, E2. In the shown example, the first electrode E1 comprises a first body B1 and a first magnetic coating MC1, while the second electrode E2 comprises a second body B2 and a second magnetic coating MC2. The first and second magnetic coatings MC1, MC2 cover the first and second bodies B1, B2, respectively. In alternative embodiments, said coverage may for example be partial, for example may be present only on those sides of the first and second electrodes E1, E2 which are facing each other.

The first and the second body B1, B2 are made of an electrically conductive material, for example made of a metal or a metal alloy, for example copper, aluminum or another metal. The first and the second body may also be made of several layers, some or all of which may be electrically conductive. The layers may for example be of different materials.

In the shown implementation, the first and the second body B1, B2 may for example be made of a non-magnetic or non-magnetizable material. The first and second magnetization are then comprised by the first and the second magnetic coating MC1, MC2, respectively. Alternatively, the first and the second body B1, B2 may for example be made of a magnetic or a magnetizable material, too. Then, the first and second magnetization are comprised partially by the first and the second body B1, B2, respectively, and partially by the first and the second magnetic coating MC1, MC2, respectively. In the present example, the lower side of the first electrode E1 represents the magnetic north pole N and the upper side of the second electrode E2 represents the magnetic south pole S. A resulting magnetic field between the first and the second electrode E1, E2 is indicated by arrows pointing from the north pole N to the south pole S. In this way, an attractive force between the first and the second electrode E1, E2 is induced, aligning the first and the second electrode E1, E2 with respect to each other.

Figure 4B shows an illustration of the first and the second electrode E1, E2 of the connector. Shown is schematically a cross section through the first and the second electrode E1, E2. In the shown example, the first electrode E1 comprises a first body B1 and a first conductive coating CC1, while the second electrode E2 comprises a second body B2 and a second conductive coating CC2. The first and second conductive coatings CC1, CC2 cover the first and second bodies B1, B2, respectively.

The first and the second body B1, B2 are made of a magnetic material, for example made of a permanent magnet of a paramagnetic material, for example a paramagnetic metal or a metal alloy, designed as an electromagnet. The first and the second body B1, B2 may also be made of several layers, some or all of which may be magnetic. The layers may for example be of different materials.

In the shown implementation, the first and the second body B1, B2 may for example be made of an electrically conductive or an electrically non-conductive material. The first and the second conductive coatings CC1, CC2 may then for example render the first and second electrodes E1, E2, respectively, electrically conductive or improve their electrical conductivity. Such implementation may be particularly advantageous if the material of which the first and the second body B1, B2 comprise or partially comprise does not achieve desired minimum values for an electrical conductivity.

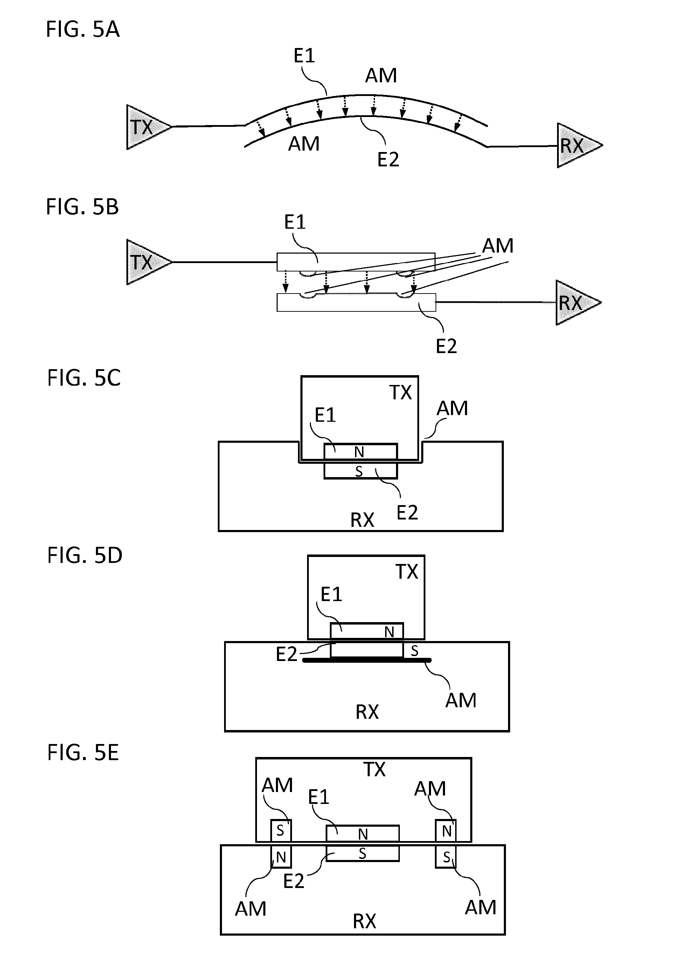

Figure 5A shows an exemplary implementation of a connector according to the improved concept comprising additional alignment means AM. The shown connector is similar to the one shown in Figure 1. Additionally, the connector of Figure 4A includes additional alignment means AM represented in the present example by mutually adapted curvatures of the first and second electrodes E1, E2. In this way, an additional improvement of physical alignment and/or mechanical stability may for example be achieved. The displayed curved plates are chosen for illustrational reasons only. In particular, other suitably adapted geometrical shapes of the first and second electrodes E1, E2 may be preferable in specific applications.

Figure 5B shows a further exemplary implementation of a connector according to the improved concept with additional alignment means AM. In addition to a connector shown in for example in Figure 1, the first electrode E1 of the connector shown in Figure 4B comprises two bulges AM on the side facing the second electrode E2. The second electrode E2 on the other hand has two cavities AM adapted to the bulges AM of the first electrode E1. Also here, the resulting additional alignment means may for example further improve a physical alignment and/or a mechanical stability in certain applications. The number of cavities AM and bulges AM is not restricted to two, in particular the first and second electrodes E1, E2, may for example also comprise only one bulge AM and one cavity AM or may comprise more than two bulges AM and cavities AM, respectively. Also, some implementations may feature both bulges and cavities on each of the first and second electrodes E1, E2.

Figure 5C shows a further exemplary implementation of a connector according to the improved concept with additional alignment means AM. In the shown implementation, the first electrode E1 is comprised by the transmitter TX and represents the magnetic north pole N. The second electrode E2 is comprised by the receiver and represents the magnetic south pole S. The resulting attractive force between the first and the second electrode E1, E2 leads to an alignment of said electrodes and/or the transmitter TX and the receiver RX with respect to each other.

The additional alignment means AM consist of shapes of a housing of the receiver RX and a housing of the transmitter TX being adapted to each other. In the shown example, the housing of the receiver RX has a cavity AM whose size is adapted such that the housing of the transmitter TX or a part of the housing of the transmitter TX fits into the cavity. This may lead to an improved mechanical stability in some applications.

Figure 5D shows a further exemplary implementation of a connector according to the improved concept with additional alignment means AM. Here, the additional alignment means AM is represented by an additional magnet AM placed for example below the second electrode E2.

In the shown example, the first electrode E1 comprises for example a permanent magnet or an electromagnet indicated by the magnetic north pole N. The second electrode E2 may for example comprise a paramagnetic material such that the first magnetization of the first electrode E1 induces the second magnetization in the second electrode E2 resulting in the attractive force. Consequently the first and the second electrode E1, E2 are aligned with respect to each other.

The additional magnet AM is oriented such that a magnetic south pole S of the additional magnet AM faces the magnetic north pole N of the first electrode E1. In this way, an additional attractive force between the first electrode E1 and the additional magnet AM is induced which may improve the alignment of the receiver RX and the transmitter TX in specific applications.

Alternatively, the second electrode E2 may for example not contain a magnetic or magnetized material. In this case, the magnetization of the additional magnet AM takes over all purposes of the second magnetization.

Figure 5E shows a further exemplary implementation of a connector according to the improved concept with additional alignment means AM. Here, the additional alignment means are represented by two additional magnets AM implemented in the transmitter TX and two additional magnets AM implemented in the receiver RX. By the shown arrangement of the additional magnets AM, an improved alignment of the receiver RX and the transmitter TX may be achieved in certain applications. The orientation of the magnetic poles N, S may for example be chosen as shown. That is one of the additional magnets AM of the transmitter TX has a south pole S facing a north pole N of one of the additional magnets AM of the receiver RX. The other one of the additional magnets AM of the transmitter TX has a north pole N facing a south pole S of the other one of the additional magnets AM of the receiver RX. This has for example the effect that an orientation of the transmitter TX with respect to the receiver RX is predetermined. Alternative implementations may comprise only one or more than two additional magnets in each of the receiver RX and the transmitter TX.

By the various implementations and embodiments of a connector according to the improved concept, a magnetic alignment of electrodes constituting the capacitive coupling of a first and a second communicator is achieved. In particular, such alignment may result in a constant, a consistent, an optimized and/or a maximized capacitance between the first and the second electrode and between the third and the fourth electrode. Additional alignment means may be combined with the magnetic alignment, for example as described in Figures 5A - 5E, but are not obligatory.

### Reference numerals

- TX: communicator, transmitter
- RX: communicator, receiver
- E1, E2, E3, E4: electrodes
- N, S: magnetic poles
- D1, D2: devices
- B1, B2: bodies of electrodes
- MC1, MC2: magnetic coatings
- CC1, CC2: conductive coatings
- AM: additional alignment means

## Claims

1. Connector for capacitive coupling of a first communicator (TX, RX) and a second communicator (TX, RX) of a communication system, the connector comprising
- a first electrode (E1) and a third electrode (E3) to be coupled to the first communicator (TX, RX); and
- a second electrode (E2) and a fourth electrode (E4) to be coupled to the second communicator (TX, RX); and wherein the first, the second, the third and the fourth electrode (E1, E2, E3, E4) are designed
- to constitute a capacitive coupling between the first and the second electrode (E1, E2) and an additional capacitive coupling between the third and the fourth electrode (E3, E4);
- to induce an attractive force between the first and the second electrode (E1, E2) and an attractive force between the third and the fourth electrode (E3, E4), respectively, by means of magnetic interactions.

2. Connector according to claim 1, wherein
- the attractive force between the first and the second electrode (E1, E2) aligns the first and the second electrode (E1, E2) with respect to each other; and
- the attractive force between the third and the fourth electrode (E3, E4) aligns the third and the fourth electrode (E3, E4) with respect to each other.

3. Connector according to one of claims 1 or 2, wherein
- the first electrode (E1) features a first magnetization, the second electrode (E2) features a second magnetization, the third electrode (E3) features a third magnetization and the fourth electrode (E4) features a fourth magnetization; and
- at least one of the first, the second, the third and the fourth magnetization is inherent to the respective of the electrodes (E1, E2, E3, E4) or is electromagnetically induced.

4. Connector according to one of claims 1 or 2, wherein
- the first electrode (E1) features a first magnetization, the second electrode (E2) features a second magnetization, the third electrode (E3) features a third magnetization and the fourth electrode (E4) features a fourth magnetization;
- at least one of the first, the second, the third and the fourth magnetization is inherent to the respective of the electrodes (E1, E2, E3, E4) or is electromagnetically induced; and
- at least one of the first, the second, the third and the fourth magnetization is induced by said inherent or electromagnetically induced magnetization.

5. Connector according to one of claims 3 or 4, wherein
- the first electrode (E1) comprises a first body (B1), the second electrode (E2) comprises a second body (B2), the third electrode (E3) comprises a third body and the fourth electrode (E4) comprises a fourth body;
- the first, the second, the third and/or the fourth body (B1, B2) are made of a magnetic or a magnetizable material; and
- the first body (B1) comprises the first magnetization, the second body (B2) comprises the second magnetization, the third body comprises the third magnetization and the fourth body comprises the fourth magnetization; and
- the first, the second, the third and/or the fourth body (B1, B2) are made of an electrically conductive material and/or the first, the second, the third and/or the fourth electrode (E1, E2, E3, E4) comprise a conductive coating (CC1, CC2) made of an electrically conductive material.

6. Connector according to one of claims 3 or 4, wherein
- the first electrode (E1) comprises a first body (B1), the second electrode (E2) comprises a second body (B2), the third electrode (E3) comprises a third body and the fourth electrode (E4) comprises a fourth body;
- the first, the second, the third and the fourth body (B1, B2) are made of an electrically conductive material;
- the first, the second, the third and/or the fourth electrode (E1, E2, E3, E4) comprises a magnetic coating (MC1, MC2) made of a magnetic or a magnetizable material; and
- the magnetic coating (MC1, MC2) of the first, the second, the third and/or the fourth electrode (E1, E2, E3, E4) comprise the first, the second, the third and/or the fourth magnetization, respectively.

7. Connector according to one of claims 1 to 6 further comprising additional alignment means (AM) designed to align and/or fix the first and the second electrode (E1, E2) with respect to each other and/or to align and/or fix the third and the fourth electrode (E3, E4) with respect to each other.

8. Connector according to claim 7, wherein the additional alignment means (AM) comprises at least one of the following:
- an extra magnet arrangement;
- a cavity/bulge pair comprised by the first and the second electrode (E1, E2) and/or the third and the fourth electrode (E3, E4);
- a curvature of the first electrode (E1) adapted to a curvature of the second electrode (E2) and/or a curvature of the third electrode (E3) adapted to a curvature of the fourth electrode (E4).

9. Connector according to one of claims 1 to 8, wherein the first, second, third and fourth electrodes (E1, E2, E3, E4) are designed to induce by means of magnetic interactions
- a repulsive force between the first electrode (E1) and the fourth electrode (E4); and
- a repulsive force between the second electrode (E2) and the third electrode (E3).

10. Communication system comprising a connector according to one of claims 1 to 9, further comprising the first and the second communicator (TX, RX) and wherein the first and the third electrode (E1, E3) are coupled to the first communicator (TX, RX) and wherein the second and the fourth electrode (E2, E4) are coupled to the second communicator (TX, RX).

11. Communication system according to claim 10, wherein
- the first communicator (TX, RX) is comprised by a first mobile electronic device (D1); and
- the second communicator (TX, RX) is comprised by a second mobile electronic device (D2) being independent from the first mobile electronic device or by a stationary electronic device (D2).

12. Communication system according to claim 10 to be used in an industrial connector arrangement and/or in a robotics system.

13. Component of a communication system for capacitive coupling of a first communicator (TX, RX) to a second communicator (TX, RX), the first communicator being coupled to a first electrode (E1) and to a third electrode (E3), the component comprising a second electrode (E2) and a fourth electrode (E4) to be coupled to the second communicator (TX, RX), wherein the second and the fourth electrode (E2, E4) are designed
- to constitute together with the first and the third electrode (E1, E3), respectively, the capacitive coupling; and
- to induce together with the first and the third electrode (E1, E3), respectively, an attractive force between the first and the second electrode (E1, E2) and an attractive force between the third and the fourth electrode (E3, E4), respectively, by means of magnetic interactions.

14. Method for capacitive coupling of a first communicator (TX, RX) and a second communicator (TX, RX) of a communication system, the method comprising steps of
- approaching the first communicator (TX, RX) to the second communicator (TX, RX) and/or vice versa;
- establishing a capacitive coupling between a first electrode (E1) coupled to the first communicator (TX, RX) and a second electrode (E2) coupled to the second communicator (TX, RX);
- establishing an additional capacitive coupling between a third electrode (E3) coupled to the first communicator (TX, RX) and a fourth electrode (E4) coupled to the second communicator (TX, RX);
- aligning the first and the second electrode (E1, E2) with respect to each other by means of a magnetic interaction between the first electrode (E1) and the second electrode (E2); and
- aligning the third and the fourth electrode (E3, E4) with respect to each other by means of a magnetic interaction between the third and the fourth electrode (E3, E4).

15. Method according to claim 14, wherein
- the magnetic interactions originate from a first magnetization of the first electrode (E1), a second magnetization of the second electrode (E2), a third magnetization of the third electrode (E3) and a fourth magnetization of the fourth electrode (E4); and
- at least one of the first, the second, the third and the fourth magnetization are inherent to the respective of the electrodes (E1, E2, E3, E4) or are electromagnetically induced.
